# EUROPÄISCHE PATENTSCHRIFT

(11) **EP 1 738 297 B1**
(45) Veröffentlichungstag und Bekanntmachung des Hinweises auf die Patenterteilung: **03.06.2009**
(21) Anmeldenummer: 05740926.0
(22) Anmeldetag: 14.04.2005
(51) Int. Cl.: G06K 7/00, G06K 19/07, G06K 17/00, G06K 19/077

(54) **VERFAHREN ZUM AUSWÄHLEN EINES ODER MEHRERER TRANSPONDER**
METHOD FOR SELECTING ONE OR SEVERAL TRANSPONDERS
PROCEDE DE SELECTION D'UN OU PLUSIEURS TRANSPONDEURS

(30) Priorität: 14.04.2004 DE 102004018541
(43) Veröffentlichungstag der Anmeldung: 03.01.2007
(73) Patentinhaber: ATMEL Germany GmbH, 74072 Heilbronn (DE)
(72) Erfinder: FRIEDRICH, Ulrich, 74248 Ellhofen (DE)
(74) Vertreter: Müller, Wolf-Christian
(86) Internationale Anmeldenummer: PCT/EP2005/003909
(87) Internationale Veröffentlichungsnummer: WO 2005/101288

(56) Entgegenhaltungen:
- WO-A-02/093522
- WO-A-20/04021257
- WO-A-20/05015480
- DE-A1- 19 646 153

## Beschreibung

Die Erfindung betrifft ein Verfahren zum Auswählen wenigstens eines Transponders oder Sensors in RFID- oder Remote-Sensor-Systemen mit einer Mehrzahl an Transpondern oder Sensoren, insbesondere Systemen mit einer Mehrzahl an Lesegeräten.

In den letzten Jahren haben in vielen Dienstleistungsbereichen, in der Beschaffungs- und Distributionslogistik, im Handel sowie in der Produktion und in Materialflusssystemen automatische Identifizierungsverfahren, auch als Auto-ID bezeichnet, große Verbreitung gefunden. Ziel der Auto-ID ist dabei die umfassende Bereitstellung von Informationen zu Personen, Tieren, Objekten und Waren.

Ein Beispiel für solche Auto-ID-Systeme sind die heute weit verbreiteten Chipkarten, bei denen ein Silizium-Speicherchip über eine mechanisch-galvanische Kontaktierung durch ein Lesegerät im Energie versorgt, ausgelesen und ggf. auch neu programmiert wird. Dabei wird das Erfassungsgerät regelmäßig als Lesegerät bezeichnet, unabhängig davon, ob damit Daten nur gelesen oder auch neu geschrieben werden können.

Bei RFID-Systemen kann die Energieversorgung des Datenträgers - des Transponders - nicht allein durch galvanisches Kontaktieren sondern auch berührungslos unter Verwendung elektromagnetischer Felder im Radiobereich (*radio frequency*: RF) erfolgen.

RFID-Systeme bestehen aus zwei grundlegenden Komponenten, nämlich dem Transponder bzw. dem Sensor im Falle eines Remote-Sensor-Systems, d.h. einem anwendungsspezifischen integrierten Schaltkreis (IC) mit einem Koppelelement, wie einer Dipolantenne als Sende- und Empfangsmittel, sowie aus dem Lesegerät (auch: Basisstation), das typischerweise ein Hochfrequenzmodul (Sender-Empfänger) und ebenfalls ein Koppelelement aufweist. Das Lesegerät versorgt regelmäßig den Transponder oder Sensor, der keine eigene Spannungsversorgung besitzen muss, mit Energie; Daten werden sowohl vom Lesegerät zum Transponder (Vorwärtsverbindung, *forward link*) als auch in umgekehrter Richtung (Rückverbindung, return link) übertragen. Solche RFID-Systeme, deren Reichweite deutlich über 1 m liegt, arbeiten mit elektromagnetischen Wellen im UHF- und Mikrowellenbereich. Dabei kommt überwiegender Weise ein nach seiner physikalischen Funktionsweise als Backscatter-Prinzip bezeichnetes Rückstrahl-Verfahren zum Einsatz, im Zuge dessen ein Teil der vom Lesegerät beim Transponder ankommenden Energie reflektiert (rückgestrahlt; sog. *Backscattering*) und dabei ggf. zur Datenübertragung moduliert wird: Der IC empfängt über das Koppelelement einen Hochfrequenz-Träger, den er durch geeignete Modulations- und Rückstreueinrichtungen teilweise an das Lesegerät zurück überträgt.

Befinden sich mehrere Transponder oder Sensoren - im Folgenden verallgemeinernd als Tags bezeichnet - in einem RF-Feld eines Lesegeräts, so muss dieses, wenn eine Datenübertragung nur zwischen einem Tag oder einer Gruppe von Tags und der Basisstation erfolgen soll, vor der Datenübertragung ein entsprechendes Auswahlverfahren durchführen. Insbesondere muss das Lesegerät die Tags singularisieren, beispielsweise um ihre Kennung zu erfahren. Die entsprechenden Verfahren werden auch als "Antikollisionsverfahren" bezeichnet.

Hier sind zunächst stochastische, ALOHA-basierte Antikollisions-Verfahren bekannt (s. Finkenzeller, RFID-Handbuch, 3. Auflage, Hanser, S. 210 ff.), die jedoch inhärente Geschwindigkeitsnachteile besitzen.

Weiterhin zeichnen sich die Tags im einfachsten Fall jeweils durch eine eindeutige Identifikations-Bitfolge, eine sog. *unique ID* oder UID, aus, die bereits durch den Hersteller statisch vorgegeben und in dem Tag gespeichert ist. Unter Verwendung dieser UID kann ein Lesegerät die Tags einzeln oder als Gruppe ansprechen. Ein entsprechendes Verfahren ist beispielsweise aus der US 5,856,788 bekannt. Hierbei erfolgt die Auswahl anhand eines bitweisen Vergleichs der eindeutigen, statisch vorgegebenen Identifikations-Bitfolge mit einer vom Lesegerät übertragen Auswahl-Bitfolge. Derartige Auswahlverfahren werden im Gegensatz zu den vorstehend erwähnten stochastischen Verfahren auch als deterministisch bezeichnet.

Eine weitere deterministische Antikollisionsroutine ist aus der DE 102 04 346 der Anmelderin der vorliegenden Anmeldung bekannt.

In offenen Systemen kann es allerdings leicht vorkommen, dass eine eindeutige UID aufgrund der Vielzahl an existierenden UID-Spezifikationen nicht mehr gewährleistet ist. Daher wurde in einer parallelen Anmeldung DE 103 36 308 (unveröffentlicht; Anmeldetag 01.08.2003) derselben Anmelderin vorgeschlagen, die Identifikations-Bitfolge der Tags um ein Zufallselement zu erweitern, so dass auch bei nicht eindeutigen Identifikations-Bitfolge eine deterministische Auswahl erfolgen kann.

Generell ist jedoch bei jeglicher Art von deterministischen Auswahlverfahren als nachteilig anzusehen, dass das Lesegerät hierbei zu Steuerzwecken an den Bitgrenzen regelmäßig Steuersignale im Form sog. *clock ticks* (Clocksignale) oder Notch-Signale (*notches*, Modulationsdips) übertragen muss:

Bei den vorstehend skizzierten, auf Backscattering basierenden RFID- und Remote-Sensor-Systemen, sendet das Lesegerät in typischen Anwendungen einen RF-Träger mit 30 dBm und ein moduliertes Signal entsprechender Bandbreite, dessen Spektrum durch den Träger und die Modulation (durch *clock-tick*-Übertragung hervor gerufene Seitenbänder) erzeugt wird. Die Tags strahlen nur einen Teil der ausgesandten bzw. empfangenen Energie zurück, so dass am Lesegerät ein Signal mit etwa -70 dBm empfangen wird, das nur knapp über dem Umgebungsrauschen oder einem Rauschspektrum anderer RF-Dienste liegt. Grenzpegel für GSM oder vergleichbare Anwendungen liegen bei -36 dBm. In RFID-Anwendungen erzeugte Seitenbänder des Lesegeräts müssen unter -54 dBm liegen, d.h. sie sind teilweise stärker als das Nutzsignal, lassen sich jedoch im Frequenzraum herausfiltern. Der Empfangskanal des Lesegeräts muss dementsprechend sehr empfindlich ausgebildet sein, wobei jedoch als nachteilig anzusehen ist, dass jedes Lesegerät damit zwangsläufig die störenden, in der Regel asynchronen Aussendungen weiterer Lesegeräte im System mit ihren jeweiligen Seitenbändern mit empfängt.

Nicht zuletzt aus den vorstehend aufgeführten Gründen ist im Rahmen von RFID-Anwendungen generell die Prozessgeschwindigkeit eines der vordringlichen Optimierungsziele. Dies gilt besonders im Bereich von UHF-(Ultra-Hochfrequenz) und Mikrowellen-Systemen, in dem aufgrund von Reflexionen regelmäßig Feldlücken auftreten können. Darüber hinaus verursachen speziell in langreichweitigen Systemen entfernte und/oder bewegte Objekte, z.B. in der Paketverteilung oder Stapleranwendungen, ein permanentes Grundrauschen und führen aufgrund von unterschiedlichen Reflexionsverhältnissen zu weiteren Problemen.

Es ist daher bei herkömmlichen RFID-Systemen, wie beispielsweise in der ISO-Norm 18000-6 beschrieben, bekannt, möglichst kurz gehaltene Kommandos zum Ansprechen von Tags durch ein Lesegerät zu verwenden, mit denen regelmäßig nur Standardeinstellungen (sog. Defaulteinstellungen), wie eine (Speicher-) Adresse auf dem Tag, übergeben werden. So ist es beispielsweise üblich, mit derartigen Kommandos die ID des Tags zu adressieren. Ein Abweichen der Applikation von solchen Einstellungen, z.B. zum Erfragen anderer Daten als der Tag-ID, führen dazu, dass das Lesegerät entweder lange Kommandosequenzen bertragen muss (Separation mittels Antikollisionsroutine gefolgt von einem READ-Befehl zum Auslesen der betreffenden Daten), oder es ergeht ein Antikollisionsbefehl, der entsprechende Parameter enthält, z.B. die auszulesende Bitadresse.

Ändern sich im Verlauf der Antikollisionsprozedur zusätzlich noch die o.g. Umgebungsbedingungen, müssen langwierig noch weitere Anpassungen, z.B. der Datenstrom-Kodierung, vorgenommen werden.

Ein solches, herkömmliches Vorgehen führt daher zu verlängerten Antikollisionsroutinen mit den bereits erwähnten negativen

Auswirkungen auf die Datenübertragung in RFID-Systemen.

In der WO 2004/021257 A ist ein Verfahren zur Datenübertragung beschrieben, welches zumindest teilweise asynchron abläuft.

Der Erfindung liegt die Aufgabe zugrunde, unter Vermeidung der vorstehend aufgeführten Nachteile ein Verfahren der eingangs genannten Art dahingehend weiter zu entwickeln, dass negative

Beeinflussungen von Übertragungseigenachaften durch Clock-/Notch-Signale des Lesegeräts bzw. der Lesegeräte auf ein Minimum reduziert werden, wobei zugleich eine schnelle und sichere Auswahl einzelner Transponder oder Sensoren (Tags) oder

Gruppen derselben auch in offenen Systemen gewährleistet ist.

Die Aufgabe wird bei einem Verfahren der eingangs genannten

Art dadurch gelöst, dass einzelne Transponder oder Sensoren durch wenigstens ein Lesegerät vorausgewählt werden und dass nach erfolgter vorläufiger Auswahl wenigstens eines Transponders oder Sensors Daten, insbesondere zum Bestätigen der

Vorauswahl, während wenigstens eines Protokollabschnitts asynchron von dem Transponder oder Sensor an das Lesegerät übertragen werden. Der im Rahmen der Erfindung wesentliche Vorteil der asynchronen Übertragung nach Vorauswahl eines oder mehrerer Tags besteht darin, dass während des betreffende Protokollabschnitts, der erfindungsgemäß insbesondere zum Bestätigen der getroffenen Vorauswahl dient, keine Notch-Signale an die Tags gesendet werden müssen, so dass zusätzlich zu dem Träger keine Seitenbänder durch die Übertragung des Lesegeräts entstehen, die sich störend auf eine Kommunikation zwischen anderen Tags und Lesegeräten auswirken könnten.

Weiterhin ist vorgesehen, dass die Vorauswahl in an sich bekannter Weise deterministisch erfolgt, wobei zusätzlich durch die Tags zu Auswahlzwecken jeweils eine erste Bitfolge mit einer Länge von m Bits erzeugt werden kann, wobei die erste Bitfolge vorzugsweise zumindest dann erzeugt wird, wenn für eine Daten-Rückverbindung von den Tags zum Lesegerät ein asynchroner Übertragungsmodus ausgewählt wurde. Ansonsten ist aufgrund des günstigeren Signal-Rauschverhältnisses prinzipiell eine synchrone Datenübertragung vorzuziehen. Ein entsprechendes Umschaltverfahren zwischen synchronen und asynchronen Rückverbindungen ist Gegenstand einer parallelen Anmeldung DE 102004014562 derselben Anmelderin. In Verbindung mit der erfindungemäßen deterministischen Auswahlprozedur ist somit eine Abwärtskompatibilität zu etablierten, vorbekannten Lösungen gegeben.

Im Rahmen einer weiteren Ausgestaltung des erfindungsgemäßen Verfahrens wird zum. Vorauswählen eines Tags eine Identifizierungs-Bitfolge mit einer Länge von n Bits mit n ≤ m verwendet, die in Weiterbildung vorzugsweise aus der ersten Bitfolge gewonnen wird. Diese erste Bitfolge kann erfindungsgemäß durch eine Zufallszahl und/oder einen Speicherinhalt des Tags gebildet werden, beispielsweise durch eine Zufallszahl in Kombination mit einer gespeicherten Tag-UID. Bei Tags mit entsprechend langer Reichweite ist hierbei zu berücksichtigen, dass sich möglicherweise mehr als 200 Tags im RF-Feld des Systems befinden, die anschließend durch ein geeignetes Auswahlverfahren, regelmäßig und im Folgenden auch als Arbitrierung/Arbitration bezeichnet, singularisiert werden müssen. Im Rahmen der Erfindung ist davon auszugehen, dass eine 16 Bit-Zufallszahl (Zahlenwerte von 1 bis 65536) ausreichend ist, um mit hinreichender Wahrscheinlichkeit zu gewährleisten, dass kein Tag-Paar jeweils dieselbe Zufallszahl erzeugt hat, die zudem noch im jeweiligen Zugriff die Auswahl gewinnt. Da die Zufallszahl bei jeder Arbitrierung im vollen Bit-Umfang zur Verfügung steht, nimmt die Wahrscheinlichkeit einer Tag-Kollision im Zufallszahlenraum ab.

Im Zuge dieser Überlegungen zeichnet sich eine weitere Variante des erfindungsgemäßen Verfahrens dadurch aus, dass zum Vorauswählen eines Transponders oder Sensors durch das Lesegerät eine Auswahl-Bitfolge in an sich bekannter Weise bitweise an die Tags übertragen und bitweise mit der Identifizierungs-Bitfolge verglichen wird. Nach den vorangehenden Ausführungen ist so insbesondere bei Verwendung zumindest teilweise zufälliger Identifizierungs-Bitfolgen auch in offenen Systemen eine sichere Arbitrierung gewährleistet. Das Vergleichskriterium wird dabei vorzugsweise von der Basisstation an die Tags übertragen und kann von einer Bitposition der zu vergleichenden Bits der Identifizierungs-Bitfolge und der Auswahl-Bitfolge abhängen.

Diejenigen Datenfelder der Identifizierungs-Bitfolge, die die genannte Zufallszahl beinhalten, lassen sich erfindungsgemäß mit fortschreitender Arbitrierung, d.h. bei immer stärkerer Eingrenzung der angesprochenen Anzahl an Tags adaptiv verändern, wozu vorzugsweise eine Bitlänge der Zufallszahl in Abhängigkeit von einem Fortschritt des bitweisen Vergleichs angepasst, insbesondere reduziert, wird. So kann beispielsweise zu Beginn der Arbitrierung mit einer 16 Bit langen Zufallszahl gearbeitet werden, die dann je nach Fortschritt des Auswahlverfahrens auf nur noch wenige Bit reduziert wird.

Um ein Tag zu singularisieren, ist nach einer bevorzugten Weiterbildung des erfindungsgemäßen Verfahrens vorgesehen, dass nach Maßgabe des Vergleichs zwischen Identifizierungs-Bitfolge und Auswahl-Bitfolge ein Tag ausgewählt und der Auswahlvorgang durch ein Steuer-Endsignal des Lesegeräts beendet wird. Hat das betreffende Tag bis zu diesem Endzeitpunkt an der Arbitrierung teilgenommen, d.h. es wurde nicht zuvor nach Maßgabe des Vergleichs stumm geschaltet, so gilt es als vorläufig durch das Lesegerät selektiert, und die Verbindung geht erfindungsgemäß in einen asynchronen Übertragungsmodus über, in dem das Lesegerät keine potentiell störenden Notch-Signale mehr überträgt.

Um das vorstehend beschriebene Steuer-Endsignal in einfacher Weise detektierbar zu machen, sieht eine Variante des erfindungsgemäßen Verfahrens weiterhin vor, dass das Lesegerät vor Übertragung der Auswahl-Bitfolge Kopfdaten, den sog. return *header*, überträgt, die Referenzsymbole zum Erkennen des Steuer-Endsignals enthalten. Beispielsweise können diese Kopfdaten vier Teilsymbole bestimmter zeitlicher Dauer aufweisen, wie an sich aus der bereits zitierten Anmeldung DE 102004014562.8 bekannt, wobei sich erfindungsgemäß jeweils ein bestimmtes Vielfaches der entsprechenden Dauer als Zeitreferenz für das Steuer-Endsignal verwenden lässt. Weiterhin kann das Lesegerät gemäß einer weiteren Ausgestaltung des Verfahrens in den genannten Kopfdaten auch Referenzsymbole zum Auswählen einer asynchronen Daten-Rückverbindung vom Tag zum Lesegerät übermitteln.

Nach dem Steuer-Endsignal werden gemäß einer Weiterbildung des erfindungsgemäßen Verfahrens während des asynchronen Protokollabschnitts reine Nutzdaten und optional zusätzliche Sicherungszeichen übertragen; eine Arbitrierung findet in diesem Abschnitt nicht statt, wobei eine Länge des Abschnitts üblicherweise diejenige des Arbitrierungsabschnitts (der Identifizierungs-Bitfolge) übersteigt. So sind ID-Längen zwischen 64 und 128 Bit üblich, bei sog. *Licence-Plate*-Anwendungen kann die Datenlänge jedoch auch bis zu 500 Bit betragen. Das Ausgeben dieser Daten (ID-Bits, Inhalt eines adressierten Datenbereichs und/oder verbleibende Reste der Zufallszahl) erfolgt vorzugsweise mit einer sog. Autodekrement-Funktion.

Nach einer äußerst bevorzugten Ausführungsform des erfindungsgemäßen Verfahrens wird der asynchrone Protokollabschnitt durch ein weiteres Steuersignal des Lesegeräts beendet. Daran schließt sich vorzugsweise ein Quittungsabschnitt an, durch den die vorläufige Auswahl eines Tags durch das Lesegerät bestätigt oder verworfen wird. In diesem Quittungsabschnitt teilt das Lesegerät demnach dem Tag auf geeignete Weise mit, ob es endgültig ausgewählt ist oder ob die erfolgte vorläufige Selektion zu verwerfen ist.

Der Quittungsabschnitt kann zwecks einer anwendungsspezifischen Flexibilität des Verfahrens synchron organisiert sein und in einem synchronen Modus übertragen werden. Alternativ ist demgemäss auch möglich, dass der Quittungsabschnitt in einem synchronen Modus übertragen wird.

In dem vorstehend genannten Quittungsabschnitt kann das Lesegerät bzw. Tag im synchronen Modus Prüfdaten, wie CRC-Daten (CRC: *cyclic redundancy check*), übertragen, deren Vergleich mit komplementären Prüfdaten in dem jeweiligen Empfänger zu einem Bestätigen oder Verwerfen der vorläufigen Auswahl verwendet wird. Das CRC kann sich z.B. auf die im asynchronen Teil übertragenen Daten beziehen. Weiterhin genügt ggf. auch ein einfaches Acknowledge-Symbol (ACK), wenn im asynchronen Teil bereits Prüfzeichen vorhanden waren, die dann vom Lesegerät lediglich noch durch ein ACK-Symbol bestätigt werden. Weiterhin kann das Lesegerät (auch) die Zufallszahl, die zur Selektion eines oder mehrerer Tags geführt hat, als Bestätigung (zurück) übertragen. Vorzugsweise sieht die vorliegende Erfindung jedoch vor, dass das Tag zusammen mit einem Datum Bit für

Bit ein Prüfzeichen innerhalb des eigentlichen Datenbits, d.h. gemeinsam mit diesem mit überträgt, sog. "*security encoding*", wie in einer parallelen, unveröffentlichten Anmeldung mit dem Aktenzeichen DE 10 2004 013 837 (Anmeldetag 17.03.2004) derselben Anmelderin beschrieben, die hiermit durch Bezugnahme zum Inhalt dieser Anmeldung gemacht wird. Wenn eine derartige Kodierung nicht ausgewählt wurde, kann das Tag am Ende der ID ein CRC übertragen.

Bei synchroner Ausgestaltung des Quittungsabschnitts führt der Vergleich komplementärer Prüfdaten zu der vorstehend skizzierten Bestimmung des Auswahlzustands. Dabei sieht eine vorteilhafte Weiterentwicklung des erfindungsgemäßen Verfahrens vor, dass die Prüfdaten unabhängig von optionalen Sicherungszeichen des asynchronen Protokollabschnitts sind, da beispielsweise die CRC-Daten des asynchronen Datenabschnitts aufgrund des erfindungsgemäßen asynchronen Interrupts (Steuer-Endsignal; s.o.) nicht eindeutig sind. So können die CRC-Daten im Tag grundsätzlich zu einem beliebigen Zeitpunkt des Bitverlaufs gebildet werden, wobei dieser Zeitpunkt vor oder nach dem genannten Interrupt liegen kann.

Dagegen ist im asynchronen Modus des Quittungsabschnitts erfindungsgemäß vorgesehen, dass das vorläufig ausgewählte Tag die eingangs erwähnte Zufallszahl und optional zugehörige Prüfdaten, wie CRC-Daten, überträgt. Wird die Übertragung im asynchronen Modus durch ein Notch-Signal unterbrochen, so muss sich die Prüfdaten auf Eigenschaften der Daten beziehen, die vor diesem Interrupt lagen. Werden aber die Prüfzeichen schon vom Tag übertragen - was bei langen IDs sinnvoll sein kann -, so genügt ein einfaches ACK-Symbol (s.o.) zur Bestätigung aus. Dabei kann die Übertragung der genannten Elemente sequentiell oder gleichzeitig erfolgen, wie in der o.g. parallelen Anmeldung DE 10 2004 013 837 derselben Anmelderin prinzipiell beschrieben. Wird dagegen aus Gründen verfügbarer Bandbreiten die vorstehend erwähnte Kombination aus Prüfdaten und (Nutz- )Daten nicht gewählt, kann auch das Tag am Ende der Übertragung ein Prüffeld anbringen, da ihm das Ende der ID bekannt ist.

Nach einer äußerst bevorzugten, alternativen Ausgestaltung des erfindungsgemäßen Verfahrens ist vorgesehen, dass zum Bestätigen der vorläufigen Auswahl ein Bestätigungssignal durch das Lesegerät an das Tag innerhalb des Quittungsabschnitts übertragen wird. Bei diesem Signal kann es sich wiederum um ein Notch-Signal des Lesegeräts handeln. Liegt das Notch-Signal außerhalb eines vorbestimmten Zeitfensters (Bestätigungszeitraum), z.B. einer 16 Bit entsprechenden Zeitdauer gemäß einer Bitlängen-Referenzzeit der asynchronen Rückverbindung, bzw. bleibt vollständig aus, so verwirft das Tag erfindungsgemäß seine vorläufige Auswahl.

Zum Aktivieren zumindest der asynchronen Datenübertragung während des wenigstens einen Protokollabschnitts ist erfindungsgemäß vorgesehen, dass ein entsprechender Aktivierungs-Steuerbefehl vom Lesegerät an die Tags übertragen wird. Um weiterhin die gesamte (Antikollisions-)Prozedur in vorteilhafter Weise zu beschleunigen, sieht eine äußerst bevorzugte Weiterbildung des erfindungsgemäßen Verfahrens vor, dass der Aktivierungs-Steuerbefehl in den Tags, z.B. in einem Register, gespeichert und bei nachfolgendem Empfang eines Wieder-Steuerbefehls, eines sog. Repeat-Kommandos, erneut ausgeführt wird. Insbesondere ist dabei der Wiederhol-Steuerbefehl gegenüber dem Aktivierungs-Steuerbefehl verkürzt.

Die gesamte Prozedur lässt sich also verkürzen, wenn nach Empfang eines kurzen Repeat-Kommandos durch das Tag ein zuvor empfangener Befehl nicht überschrieben sondern vielmehr reaktiviert wird.

Dementsprechend wird die eingangs formulierte Aufgabe auch gelöst durch ein Verfahren zum Steuern einer Datenübertragung, insbesondere einer Antikollisionsprozedur, insbesondere nach einem der Patentansprüche 1 bis 23, in RFID- oder Remote-Sensor-Systemen mit einer Mehrzahl an Transpondern oder Sensoren, insbesondere Systemen mit einer Mehrzahl an Lesegeräten, wobei eine von einem Lesegerät an wenigstens einen Transponder oder Sensor übertragene Befehlsstruktur zur Datenübertragung durch den Transponder oder Sensor mit zusätzlichen Parameter- und/ oder Adress-Erweiterungen durch den Transponder oder Sensor ausgeführt und gespeichert wird und wobei nach anschließendem Empfang eines Wiederhol-Steuerbefehls der gespeicherte Befehl erneut ausgeführt wird.

Dabei ist vorzugsweise jedoch zunächst sicherzustellen, dass das neu empfangene Kommando gültig ist, so dass sich das bzw. die erfindungsgemäße Verfahren in Weiterbildung dadurch auszeichnet bzw. auszeichnen, dass vor einem erneuten Ausführen des Aktivierungs-Steuerbefehls Prüfdaten des Wiederhol-Steuerbefehls überprüft werden.

Bei Verwendung von Antikollisionsroutinen, die auf Zeigern (*pointer*) basieren kann vorgesehen sein, dass die Befehlsstruktur als Erweiterung einen Zeiger auf einen Speicherblock und eine Bitadresse des Tags enthält.

Zur weiteren Beschleunigung des erfindungsgemäßen (Antikollisions-)Verfahrens ist der Wiederhol-Steuerbefehl gegenüber dem Aktivierungs-Steuerbefehl vorzugsweise verkürzt.

Um ein Überschreiben des gespeicherten Befehls auszuschließen, sieht eine Weiterbildung des erfindungsgemäßen Verfahrens vor, dass durch den Empfang des Wiederhol-Steuerbefehls ein Speichern dieses Befehls, sprich: des Wiederhol-Steuerbefehls, verhindert wird.

Zur Verbesserung der Übertragungsrate und damit zur weiteren Beschleunigung kann vorgesehen sein, dass der Wiederhol-Steuerbefehl ein Steuersymbol zum Aktivieren einer Übertragung von Sicherungszeichen gemeinsam mit Nutzdaten innerhalb einzelner

Datenbits derselben enthält.

Nach einer äußerst bevorzugten Weiterbildung des erfindungsgemäßen Verfahrens enthält der Wiederhol-Steuerbefehl ein Quittungsbit zum Bestätigen oder Verwerfen der Vorauswahl eines Tags. Beispielsweise kann das neu empfangene Kommando ein Quittungsbit in Gestalt eines ACK- oder NACK-Symbols (NACK: NOT acknowledged; entsprechend z.B. einer logischen "0") enthalten; ein NACK-Symbol führt dann z.B. zu der vorstehend beschriebenen Wiederhol-Prozedur, wohingegen ein ACK-Symbol (logische "1") dem Tag seine Auswahl bestätigt, woraufhin dieses in einen Stillhaltemodus wechselt und nicht mehr an der Antikollision teilnimmt, bis es ein entsprechendes Reset-Kommando empfängt.

Der Empfang eines NACK-Symbols dagegen ermöglicht erfindungsgemäß entsprechend einer vorherigen Vereinbarung im Protokoll folgende Weiterführungen des Verfahrens: 1) das zuletzt selektierte Tag verwirft das Ergebnis der letzten Arbitrierung und nimmt in normaler Weise wieder an der nächsten Arbitrierung teil; oder 2) das zuletzt selektierte Tag verwirft das Ergebnis nicht und sendet nach den anschließenden Rückverbindungs-Kopfdaten (s.u.) wieder einen Datenstrom. Da die anderen Tags wissen vereinbarungsgemäß, dass keine Arbitrierung stattfindet und nehmen daher an der Übertragung nicht teil.

Anschließend beginnt das erfindungsgemäße Verfahren vorzugsweise direkt mit der Übertragung von Rückverbindungs-Kopfdaten (dem *return header*; s.o.) als erstem Teilabschnitt einer erfindungsgemäßen Rückverbindung, die demnach umfasst:
- den genannten Kopfabschnitt zur Referenzübermittlung und zur Umschaltung in den asynchronen Modus;
- einen Zufallsabschnitt, in dem das Lesegerät eine Auswahl-Bitfolge mit einer Länge von n Bits überträgt. Wenn die Arbitrierung im Vollduplex (im Zeitbereich) erfolgt, kann das Lesegerät auf Basis der Zufallszahl, die es von den Tags empfangen hat, eine Entscheidung an die Tags senden, die für wenigstens einen Tag der von ihm übermittelten Zufallszahl entspricht; besitzt das Tag aus Kostengründen eine geringere Bitanzahl als beispielsweise die o.g. 16 Bit, so kann die Bitfolge mit Speicherinhalt des Tags aufgefüllt werden; dieser Abschnitt ist zum Bilden von Quittungs-CRC-Daten verwendbar;
- ein Trennelement (Steuersignal) des Lesegeräts zum Beenden des deterministischen, Notch-gesteuerten Auswahlvorgangs;
- einen asynchronen Datenabschnitt, in dem das Tag seine ID bzw. einen angeforderten Datenstrom backscattert;
- ein weiteres Trennelement (Steuer-Endsignal) des Lesegeräts zum Beenden des (asynchronen) Datenabschnitts; und
- einen Quittungsabschnitt mit vorbestimmter Länge (z.B. 16 Bit), die durch das Lesegerät kontrolliert wird.

Es ist jedoch auch denkbar, dass das Tag die ID und ein zugehöriges CRC asynchron überträgt, woraufhin lediglich ein ACK-Symbol vom Lesegerät übermittelt zu werden braucht. Nur wenn ein übertragener Befehl auf ein Datenelement zeigt, das nicht eindeutig abgeschlossen ist, ist diese Vorgehensweise nicht praktikabel. In einem solchen Fall werden grundsätzlich weitere Kontrollgrößen und -Felder benötigt.

Weitere Eigenschaften und Vorteile der Erfindung ergeben sich aus der nachfolgenden Beschreibung von Ausführungsbeispielen anhand der Zeichnung. Es zeigt:
- Fig. 1: schematisch ein RFID-System mit einem Lesegerät und einer Anzahl von Tags (Transponder oder Remote Sensoren) im Ansprechbereich des Lesegeräts;
- Fig. 2: ein Blockschaltbild eines Tags gemäß der Fig. 1;
- Fig. 3a: einen ersten Schritt eines Datenübertragungsschema gemäß einer ersten Ausführung des erfindungsgemäßen Verfahrens;
- Fig. 3b: einen folgenden Schritt des Verfahrens gemäß der Fig. 3b;
- Fig. 4: ein Datenübertragungsschema gemäß einer zweiten Ausführung des erfindungsgemäßen Verfahrens;
- Fig. 5: ein Datenübertragungsschema gemäß einer dritten Ausführung des erfindungsgemäßen Verfahrens; und
- Fig. 6: ein Datenübertragungsschema gemäß einer vierten Ausführung des erfindungsgemäßen Verfahrens.

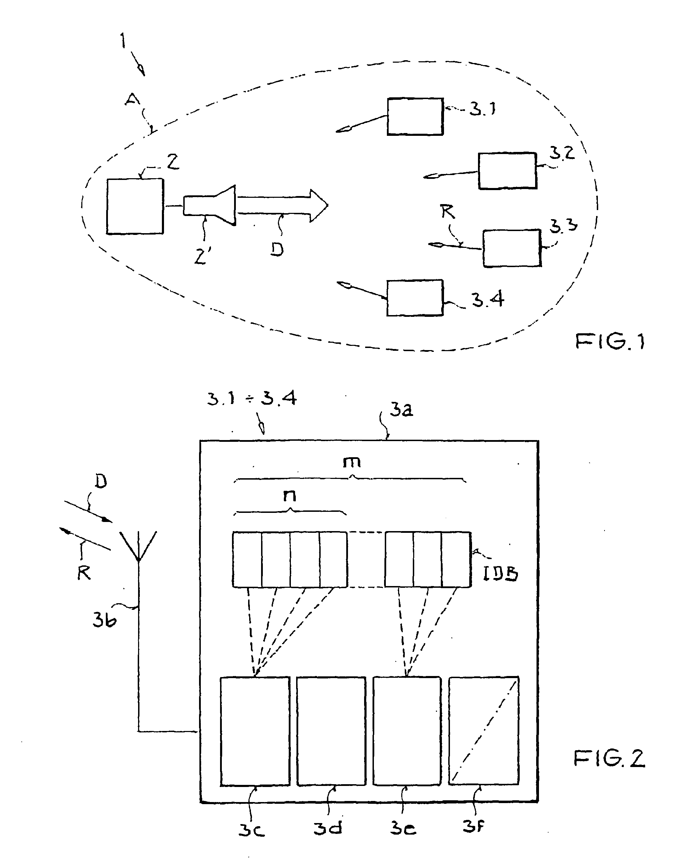

Die Fig. 1 zeigt ein RFID-System 1 mit einem Lesegerät 2 in Verbindung mit einem geeigneten Sende- und Empfangsmittel 2', wie einer Dipol-Antenne, und eine Anzahl von Transpondern 3.1-3.4, die sich gemeinsam in einem Ansprechbereich A des Lesegeräts 2 befinden.

Ein von dem Lesegerät 2 bzw. dem Sendemittel 2' ausgesendeter Datenstrom D wird dabei von allen Transpondern 3.1-3.4 gleichzeitig empfangen. Die Datenübertragung vom Lesegerät 2 zu einem Transponder 3.1-3.4 wird im Folgenden als Vorwärtsverbindung (*forward link*) bezeichnet. Die Transponder 3.1-3.4 antworten zumindest auf eine abgeschlossene Datenübertragung vom Lesegerät 2 über Rückverbindungen R (*return link*), wobei ein Teil der vom Lesegerät 2 zusammen mit den Daten D beim Transponder 3.1-3.4 ankommenden Energie reflektiert (rückgestrahlt; sog. *Backscattering*) und dabei ggf. zur Datenübertragung vom Transponder 3.1-3.4 zum Lesegerät 2 moduliert wird. Bei einem Einsatz Vollduplex-fähiger Systeme 1 (gleichzeitige Übertragung in der Vorwärts- und Rückverbindung) kann eine Datenübertragung zum Lesegerät 2 auch bereits während der Vorwärtsverbindung erfolgen.

Für bestimmte Anwendungen kann es erforderlich sein, dass das Lesegerät 2 einen bestimmten Transponder 3.1-3.4 oder eine Gruppe von Transpondern auswählt (singularisiert), um diesen oder diese gezielt ansprechen zu können, beispielsweise für Programmieranwendungen.

Obwohl hier und im Folgenden regelmäßig nur von Transpondern die Rede ist, lässt sich die vorliegende Erfindung auch in Systemen mit einer Anzahl von Remote Sensoren, ggf. auch in Verbindung mit einer Anzahl von Transpondern, einsetzen.

Die Fig. 2 zeigt schematisch anhand eines Blockschaltbilds einen Transponder 3.1-3.4 des RFID-Systems 1 der Fig. 1. Der Transponder 3.1-3.4 weist demnach zumindest einen integrierten Schaltkreis (IC) 3a und als einzige äußere Beschaltung zum Senden und Empfangen von Daten D, R inkl. Befehlen bzw. Steuersignalen (Notch-Signalen) und ggf. Energie eine (Dipol-) Antenne 3b auf. Weiterhin besitzt der Transponder 3.1-3.4 gemäß der Fig. 2 einen Zufallszahlen-Generator 3c, Vergleichsmittel 3d, insbesondere für eine deterministische Arbitrierung, Speichermittel 3e, wie ein EEPROM, und einen CRC-Generator 3f mit entsprechendem Register, der auch mehrteilig ausgebildet sein kann (strich-punktierte Linie), um voneinander unabhängige CRC-Werte bestimmen zu können (dazu weiter unten).

Der Transponder 3.1-3.4 ist zum Bereitstellen einer Identifizierungs-Bitfolge IDB mit einer Länge von m Bits ausgebildet, wobei die m Bits teilweise aus dem Zufallszahlen-Generator 3c stammen, also eine Zufallszahl der Bitlänge m beinhalten, und teilweise einen Speicherinhalt der Speichermittel 3e wiedergeben, insbesondere wenn der Zufallszahlen-Generator 3c (z.B. aus Kostengründen) nicht in der Lage ist, eine ausreichend lange Zufallszahl zu erzeugen. Diese Zusammensetzung der Identifizierungs-Bitfolge IDB in der Fig. 2 durch gestrichelte Verbindungslinien symbolisiert.

Die Identifizierungs-Bitfolge IDB wird erfindungsgemäß in an sich bekannter Weise zum deterministischen Auswählen des Transponders 3.1-3.4 durch das Lesegerät 2 (Fig. 1) verwendet. Hierzu ist die Übertragung einer geeigneten Auswahl-Bitfolge (nicht dargestellt) durch das Lesegerät 2 erforderlich, die durch die Vergleichsmittel 3d des Transponders 3.1-3.4 bitweise mit der Identifizierungs-Bitfolge IDB verglichen wird. Nach Maßgabe des Vergleichsergebnisses wird anschließend der Transponder 3.1-3.4 zumindest vorläufig ausgewählt (z.B. durch Setzen eines entsprechenden Flags in den Speichermitteln 3e). Die Bitlänge m der Folge IDB lässt sich überdies in Abhängigkeit vom Fortschritt der Arbitrierung (Eingrenzung des Kreises noch anzusprechender Transponder) adaptiv anpassen, sprich: verkürzen.

Erfindungsgemäß wird zur Arbitrierung effektiv nur eine Teilbitfolge der Identifizierungs-Bitfolge IDB mit Länge n, n ≤ m, verwendet (vgl. Fig. 2), wobei das Lesegerät 2 nach einem Vergleich von n Bits ein geeignetes Steuersignal überträgt, welches die deterministische (synchrone) Arbitrierung beendet.

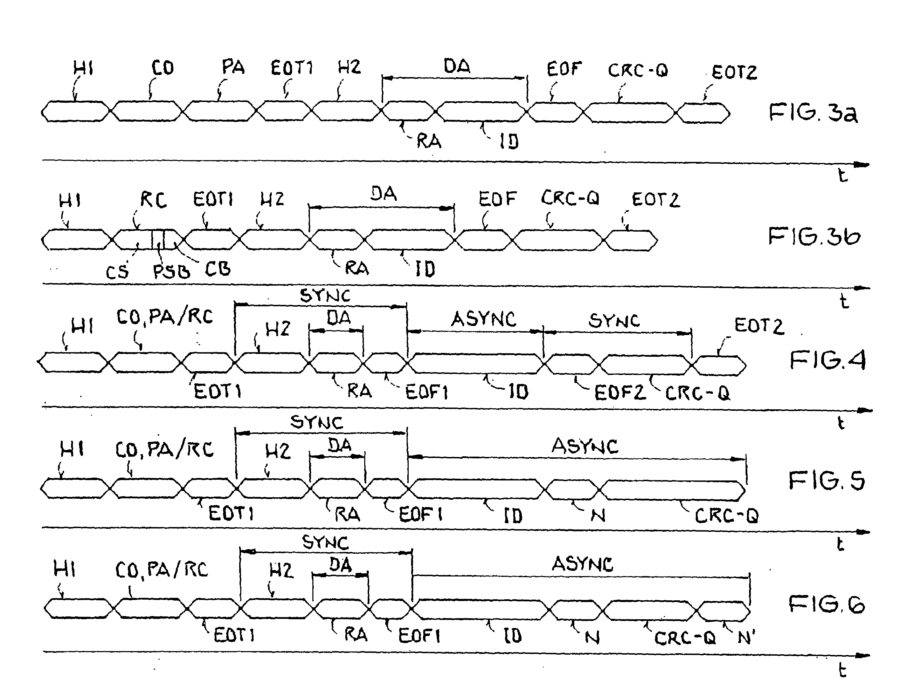

In der Folge überträgt der Transponder 3.1-3.4 asynchron im Backscatter zumindest ID-Daten oder andere Speicherinhalte aus seinen Speichermitteln 3e, was weiter unten anhand der Fig. 4 bis 6 noch detailliert erläutert wird.

Die Fig. 3a, b zeigen zunächst schematisch anhand jeweils einer exemplarischen Datenübertragung zwischen Transponder und

Lesegerät das Konzept einer beschleunigten deterministischen Arbitrierung, welches innerhalb des erfindungsgemäßen Datenübertragungsverfahren zum Einsatz kommen kann. In der Fig. 3a ist über der Zeit t zunächst (links) dargestellt, wie das Lesegerät (Fig. 1) Kopfdaten H1 mit Referenzsymbolen gefolgt von Befehlsdaten CO mit zugehörigen Parameterdaten PA, ein sog. Long-Kommando mit einer Länge > 8 Bit, beispielsweise 24 Bit für auf Zeigern (pointer) basierende Kommandos. Das Long-Kommando bewirkt vorzugsweise die Aktivierung des erfindungsgemäßen Datenübertragungsverfahrens, beispielsweise in einer Ausgestaltung als "Zufallsmodus", in dem die Arbitrierung allein oder zumindest im wesentlichen über den Zufallsteil der Identifizierungs-Bitfolge IDB erfolgt (s.u. Fig. 4 bis 6). Daran schließt sich ein EOT-Feld EOT1 an (EOT: *end-of-transmission*), woraufhin das Lesegerät einen *return header* H2 sendet, der Referenzen für die Rückverbindung R (Fig. 1) enthält, die sich erfindungsgemäß zusätzlich auch zum Auswählen beispielsweise des zuvor angesprochenen Zufallsmodus nutzen lassen, wie prinzipiell in der o.g. unveröffentlichten, parallelen Anmeldung DE 102004014562.8 beschrieben. Anschließend erfolgt nach einem weiteren Kopfdatenabschnitt H2 die bereits erwähnte deterministische Arbitrierung DA über eine Identifizierungs-Bitfolge IDB (Fig. 2) mit einem Zufallsteil RA und ggf. einem zusätzlichen ID-Teil ID, die wahlweise im Halb- oder Vollduplex-Modus erfolgen kann. Die Kopfdaten H2 enthalten insbesondere Referenzsymbole für das Detektieren eines nachfolgenden EOF-Symbols (EOF: *end-of-frame*) des Lesegeräts.

Der Arbitrierungsstrom endet mit einem EOF-Feld EOF, gefolgt von einem CRC-Quittungsabschnitt CRC-Q und einem weiteren EOT-Feld EOT2. Der Quittungsabschnitt CRC-Q dient dem Lesegerät dazu, dem Transponder mitzuteilen, ob er endgültig ausgewählt ist oder ob er die (vorläufige) Auswahl verwerfen soll. Allerdings folgt der CRC-Abschnitt nicht zwangsläufig, da eventuell schon für den Arbitrierungsabschnitt DA das weiter oben beschriebene "*security encoding*" ausgewählt worden war. Letzteres kommt vorzugsweise dann zum Einsatz, wenn die Datenlänge einer Übertragung des Tags nicht fixiert ist: bei kurzen IDs (64 oder 96 Bit) mit definiertem Ende ist auch ein normales Encoding-Schema mit anschließendem CRC ausreichend, besitzt jedoch den inhärenten Nachteil, dass die vollständige Übertragung empfangen werden muss, um bezüglich ihrer Integrität wirklich sicher zu sein.

Wenn hierbei z.B. "security"-Daten nicht vorliegen oder ein verkehrtes CRC empfangen wurde, kann sich das Lesegerät in eine andere Richtung wenden, in der sich kein Tag meldet, und anschließend ein EOF-Symbol senden. Durch ein folgendes NACK lässt sich dann der ganze Vorgang wiederholen.

In nachfolgenden Übertragungsschritten kommen gemäß der

Fig. 3b anstelle des Long-Kommandos CO, PA verkürzte Befehlsstrukturen (Short-Kommando), sog. Repeat-Kommandos RC, als Wieder-Steuerbefehle zum Einsatz. Diese besitzen erfindungsgemäß vorzugsweise eine Länge von 8 Bit mit einer 5 Bit langen Befehlsstruktur CS, einem Parameter- oder Steuerbit PSB und zwei CRC-Bits CB, was in der Fig. 3b schematisch dargestellt ist. Das Steuerbit PSB des Wiederhol-Steuerbefehls kann beispielsweise als Steuersymbol zum Aktivieren oder Deaktivieren einer Übertragung von Sicherungszeichen gemeinsam mit Nutzdaten innerhalb einzelner Datenbits derselben - wie weiter oben ("security encoding") schon detailliert erläutert wurde - dienen.

Alternativ kann das o.g. Parameter- oder Steuerbit PSB auch als Quittungsbit fungieren. Insbesondere im Falle einer Antikollisionsprozedur mit einem erfindungsgemäßen asynchronen Rückverbindungs-Anteil kann es geschehen, dass das Lesegerät in dem asynchronen Protokollabschnitt einen (Übertragungs- )Fehler entdeckt. Herkömmlicher Weise müsste das Lesegerät nun einen READ-Befehl absetzen, der das betreffende Tag adressiert. Hierbei handelt es sich jedoch wiederum um ein Long-Kommando mit mehr als 8 Bit, das länger ist als das zuvor zum Beschleunigen der Antikollision eingesetzte Short-Kommando ist. Vorzuziehen ist daher die Verwendung des bereits erwähnten Quittungsbits in Gestalt eines ACK-/NACK-Symbols innerhalb des Repeat-Kommandos RC, wobei ein logischer Wert "1" für ACK (= Zustimmung) und ein logischer Wert "0" für NACK (= keine Zustimmung) steht. Im Falle eines ACK geht das zuletzt ausgewählte Tag in einen Stillhaltemodus: Wenn ein Tag im Zuge einer Arbitrierung ausgewählt wurde, setzt es ein Flag, das anzeigt, dass das betreffende Tag selektiert ist. Bei anschließendem Empfang eines weiteren Antikollisions-Befehls geht es in den Stillhaltemodus und nimmt nicht mehr an der Antikollisionsroutine teil. Somit bestätigt ein ACK dem Tag, dass es tatsächlich in den Stillhaltemodus wechseln kann.

Bei erfindungsgemäßer Verwendung des vorstehend beschriebenen Repeat-Kommandos RC wird das zuvor von dem Transponder empfangene (und z.B. in den Speichermitteln 3e gehaltene) Long-Kommando nicht überschrieben, sondern reaktiviert und erneut ausgeführt, wie anhand der Fig. 3a beschrieben. Dadurch lässt sich das Antikollisions-Verfahren zeitlich verkürzen, wie aus einem Vergleich der Fig. 3a, b ersichtlich.

Ein weiterer Beschleunigungseffekt resultiert auch aus der gegebenen, verringerten Bitfehlerrate, da aufgrund der verkürzten, deterministisch-synchronen Protokollabschnitte weniger potentielle Störer/Störfälle existieren.

Nach abgeschlossener, erfolgreicher Selektion eines Transponders oder einer Gruppe von Transpondern kann das Lesegerät den Transponder weiter befragen (Daten abrufen) oder programmieren oder aber ein neues Arbitrierungs-Kommando übertragen.

Die Fig. 4 bis 6 zeigen weitere, unterschiedliche Varianten des erfindungsgemäßen Datenübertragungsverfahrens, die sich insbesondere in vorteilhafter Weise mit den vorstehend anhand der Fig. 3a, b beschriebenen Konzepten kombinieren lassen. Die dargestellten Verfahren beginnen jeweils mit einer Übertragung der bereits vorstehend beschriebenen Kopfdaten H1, Befehlsdaten (Long-Kommando CO, PA oder Repeat-Kommando RC) und einem EOT-Feld EOT1. Daran schließt sich jeweils ein synchroner Übertragungsabschnitt SYNC an, der einen Kopfabschnitt H2 (s.o.) sowie Zufallsdaten RA, gefolgt von einem EOF-Symbol EOF1, enthält. Der synchrone Datenabschnitt SYNC wird erfindungsgemäß zu Arbitrierungszwecken genutzt; das EOF-Symbol beendet die Arbitrierung, sobald ein Transponder oder eine Gruppe von Transpondern ausgewählt ist. Somit ist wiederum die synchrone Übertragungsphase, während der das Lesegerät potentiell störende Notch-Signale überträgt, auf das zur Arbitrierung notwendige Minimum beschränkt. Die Arbitrierung kann - wie bereits erwähnt - im Voll- oder Halbduplex-Betrieb erfolgen.

An den synchronen Abschnitt SYNC schließt sich jeweils ein asynchroner und deshalb "Notch-freier" Abschnitt ASYNC an, der nach den dargestellten Ausführungsformen unterschiedliche (Bit-)Längen aufweisen und unterschiedliche Datenstrukturen umfassen kann:

Gemäß der Fig. 4 werden während des asynchronen Abschnitts ASYNC lediglich ID-Daten ID des Transponders übertragen. Danach schaltet das System zurück auf synchrone Übertragung SYNC zum Übermitteln eines weiteren EOF-Symbols EOF2, gefolgt von einem Quittungsabschnitt CRC-Q (s.o.). Beendet wird die Übertragung in Fig. 4 durch ein EOT-Symbol EOT2. Der Quittungsabschnitt dient dem Lesegerät - wie bereits gesagt - dazu, dem Transponder mitzuteilen, ob er endgültig ausgewählt ist oder ob er die (vorläufige) Auswahl verwerfen soll.

Im synchronen Modus des Quittungs-Abschnitts führt ein Vergleich, beispielsweise eines vom Lesegerät übertragenen CRC-Felds mit in dem betreffenden Transponder selbst bestimmten CRC-Daten, z.B. in den hierzu geeignet ausgebildeten Vergleichsmitteln 3d (Fig. 2), zur Bestimmung des Auswahlzustands. Dabei muss das übertragene CRC-Feld insbesondere unabhängig von CRC-Daten des Datenbereichs ID sein, da diese aufgrund des asynchronen Interrupts EOF2 nicht eindeutig sind.

Gemäß der Fig. 5 werden sowohl die ID-Daten ID als auch die nachfolgenden Quittungsdaten CRC-Q asynchron übertragen. Dazwischen sendet das Lesegerät ein einzelnes Trennelement N zum Trennen der beiden Datenabschnitte ID, CRC-Q. Bei dem Trennelement kann es sich wiederum um ein Notch-Signal N handeln.

Der Quittierabschnitt CRC-Q umfasst erfindungsgemäß eine bestimmte Anzahl von Bits, beispielsweise 16, steht jedoch hinsichtlich seiner Länge unter Kontrolle des Lesegeräts. Dies ist aus der abschließenden Fig. 6 erkennbar, der zufolge das Lesegerät den Quittierabschnitt CRC-Q durch Senden eines weiteren Notch-Signals N' (vorzeitig) beendet. Auf diese Weise lässt sich erfindungsgemäß der Quittiervorgang so gestalten, dass im Falle eines akzeptierten Selektions-/Vergleichsergebnisses das Lesegerät das letztgenannte Notch-Signal N' innerhalb eines bestimmten Zeitfenster in Form eines Bestätigungszeitraums übertragen muss, beispielsweise vor Ablauf einer den o.g. exemplarischen 16 Bit entsprechenden Zeit. Liegt das Signal N' nach Art einer "Fehlerquittung" außerhalb des vereinbarten Zeitfensters, z.B. nach 17 Bits, muss der Transponder die vorläufige Selektion verwerfen. Zusätzlich startet das Notch-Signal N' die Dekodierung einer neuen Befehlssequenz (Programmierung, Datenabfrage, Arbitrierung usw.).

Erfindungsgemäß ist es auch möglich, dass der Transponder einen CRC-Wert über eine empfangene Bitfolge bildet und diese an das Lesegerät übermittelt. Dazu wird zunächst der CRC-Generator 3f (Fig. 2) des Transponders 3.1-3.4 in einen Grundzustand versetzt. Da aus Kommunikationsgründen dem Lesegerät die Generator-Gleichung bekannt sein muss, kann der Zufallszahlen-Generator 3c entsprechend beliebig ausgebildet sein. Hierbei ist zu beachten, dass die Zufallszahl nur so weit in das CRC eingehen darf, wie sie durch das Lesegerät abgefragt wurde. Wurden z.B. nur 3 Bits von 16 abgefragt, dann dürfen entsprechend nur 3 Bit zum Bestimmen der CRC-Daten heran gezogen werden. Aufgrund der vorstehend geforderten Unabhängigkeit der CRC-Daten für den asynchronen Datenabschnitt ID und den Quittungsabschnitt CRC-Q ist ein solches Vorgehen insbesondere dann möglich, wenn während der Kommunikation zwei unabhängige CRC-Generatoren verwendet werden, was in der Praxis regelmäßig der Fall ist; dies ist in der Fig. 2 durch die strich-punktierte Linie in den Generatormitteln 3f symbolisiert.

Gemäß den Ausführungsformen der Fig. 4 bis 6 wird die eigentliche Arbitrierung innerhalb des erfindungsgemäßen Übertragungsverfahrens ausschließlich über die Zufallszahl innerhalb der Identifizierungs-Bitfolge IDB (Fig. 2) durchgeführt ("Zufallsmodus") und vorzugsweise (vorzeitig, d.h. vor Abarbeiten der gesamten Identifizierungs-Bitfolge IDB des Transponders 3.1-3.4) durch ein EOF-Symbol des Lesegeräts beendet, woraufhin der Transponder in seinem Speicher den Zustand "Arbitrierung gewonnen" ablegt. In der Praxis sinnvolle Weiterführungen des Verfahrens sehen dann insbesondere vor, dass anschließend zwingend die Transponder-ID ausgegeben wird (sog. *anonymous read*; vgl. ISO 18000-6 Type 6) oder dass anschließend die gewünschten Daten, z.B. beginnend mit einer Startadresse eines durch das Kommando CO, PA (s.o.) adressierten EEPROM-Inhalts, vom Transponder übertragen werden (sog. *truncated replay*), in beiden Fällen ggf. automatisch.

In diesem Kontext bedeutet "*anonymous read*", dass die ID nicht bekannt sein muss; sie gehört daher zum "Nachsatz", d.h. wird anschließend ausgegeben. Unter "*truncated replay*" wird ein Verfahren verstanden, bei dem das Lesegerät bereits Teile der ID oder von Inhalten des Speichers kennt, so dass diese im asynchronen Teil nicht mehr wiederholt werden müssen, sondern gleich der Adressvektor weitergeschaltet wird.

Ein solcher Zufallsmodus (s.o.) hat erfindungsgemäß weiterhin vorzugsweise zur Folge, dass die Arbitrierung bitweise unter Verwendung eines im Extremfall nur ein Bit breiten Zufallszahlen-Generators durchgeführt wird, dessen erzeugter Zufallswert dann entsprechend bitweise eingespielt wird. Im Falle eines speziell fünf Bit langen Generators (LFSR: *linear feedback shift register*; linear rückgekoppeltes Schieberegister) wird alle 4 Bit ein 4 Bit-Wert "entnommen", so dass der ganze Wertevorrat des LFSRs (0 bis 15) zur Verfügung steht. Ein Vorteil dieser Ausgestaltung besteht in einem verringerten Schaltungsaufwand bei gleichzeitig reduziertem Stromverbrauch. Zudem kann das Zufallszahlen-Feld so lang gemacht werden, wie im Rahmen der Anwendung erforderlich, nämlich zwischen einem Bit und theoretisch unendlich vielen Bits, ohne dass hierzu eine schaltungstechnische Änderung erforderlich wäre.

### Bezugszeichenliste

- 1: RFID-System
- 2: Lesegerät
- 2': Sende- und Empfangsmittel
- 3.1-3.4: Transponder
- 3a: integrierter Schaltkreis
- 3b: Antenne
- 3c: Zufallszahlen-Generator
- 3d: Vergleichsmittel
- 3e: Speichermittel
- 3f: CRC-Generator
- A: Ansprechbereich, Feld
- ASYNC: asynchroner Abschnitt
- CO: Befehlsdaten, Befehl
- CRC: Prüfdaten
- CB: CRC-Bit
- CRC-Q: Quittungsabschnitt
- CS: Befehlsstruktur
- D: Datenstrom
- DA: deterministische Arbitrierung
- EOF, EOF1, EOF2: Endsignal
- EOT1, EOT2: Enddaten
- H1, H2: Kopfdaten
- ID: ID-Daten
- IDB: Identifizierungs-Bitfolge
- m: Bitanzahl
- n: Bitanzahl
- N,N': Notch-Signal
- PA: Parameterdaten
- PSB: Parameter-/Steuerbit
- R: Rückverbindung
- RC: Repeat-Kommando
- RLH: Rückverbindungs(Kopf-)Daten
- SYNC: synchroner Abschnitt
- t: Zeit

## Patentansprüche

1. Verfahren zum Auswählen wenigstens eines Transponders oder Sensors in RFID- oder Remote-Sensor-Systemen mit einer Mehrzahl an Transpondern oder Sensoren, insbesondere Systemen mit einer Mehrzahl an Lesegeräten, **dadurch gekennzeichnet, dass** einzelne Transponder oder Sensoren durch wenigstens ein Lesegerät deterministisch vorausgewählt werden und dass nach erfolgter vorläufiger Auswahl wenigstens eines Transponders oder Sensors Daten, insbesondere zum Bestätigen der Vorauswahl, während wenigstens eines Protokollabschnitts asynchron von dem Transponder oder Sensor an das Lesegerät übertragen werden.

2. Verfahren nach Anspruch 1, **dadurch gekennzeichnet, dass** durch die Transponder oder Sensoren zu Auswahlzwecken jeweils eine erste Bitfolge mit einer Länge von m Bits erzeugt wird.

3. Verfahren nach Anspruch 2, **dadurch gekennzeichnet, dass** die erste Bitfolge zumindest dann erzeugt wird, wenn für eine Daten-Rückverbindung von den Transpondern oder Sensoren zum Lesegerät ein asynchroner Übertragungsmodus ausgewählt wurde.

4. Verfahren nach einem der Ansprüche 1 bis 3, **dadurch gekennzeichnet, dass** zum Vorauswählen eines Transponders oder Sensors eine Identifizierungs-Bitfolge mit einer Länge von n Bits verwendet wird, wobei gilt n ≤ m.

5. Verfahren nach Anspruch 4, **dadurch gekennzeichnet, dass** die Identifizierungs-Bitfolge aus der ersten Bitfolge gewonnen wird.

6. Verfahren nach einem der Ansprüche 2 bis 5, **dadurch gekennzeichnet, dass** die erste Bitfolge durch eine Zufallszahl und/oder einen Speicherinhalt gebildet wird.

7. Verfahren nach einem der Ansprüche 1 bis 6., **dadurch gekennzeichnet, dass** zum Vorauswählen eines Transponders oder Sensors durch das Lesegerät eine Auswahl-Bitfolge bitweise an die Transponder oder Sensoren übertragen und bitweise mit der Identifizierungs-Bitfolge verglichen wird.

8. Verfahren nach den Ansprüchen 6 und 7, **dadurch gekennzeichnet, dass** eine Bitlänge der Zufallszahl in Abhängigkeit von einem Fortschritt des bitweisen Vergleichs angepasst, insbesondere reduziert, wird.

9. Verfahren nach Anspruch 7 oder 8, **dadurch gekennzeichnet, dass** nach Maßgabe des Vergleichs ein Transponder oder Sensor ausgewählt und der Auswahlvorgang durch ein Steuer-Endsignal des Lesegeräts beendet wird.

10. Verfahren nach Anspruch 9, **dadurch gekennzeichnet, dass** das Lesegerät vor Übertragung der Auswahl-Bitfolge Kopfdaten überträgt, die Referenzsymbole zum Erkennen des Steuer-Endsignals enthalten.

11. Verfahren nach Anspruch 9 oder 10, **dadurch gekennzeichnet, dass** das Lesegerät vor Übertragung der Auswahl-Bitfolge Kopfdaten überträgt, die Referenzsymbole zum Auswählen einer asynchronen Daten-Rückverbindung vom Transponder oder Sensor zum Lesegerät enthalten.

12. Verfahren nach einem der Ansprüche 1 bis 11, **dadurch gekennzeichnet, dass** während des asynchronen Protokollabschnitts Nutzdaten und optional zusätzliche Sicherungszeichen übertragen werden.

13. Verfahren nach Anspruch 12, **dadurch gekennzeichnet, dass** die Sicherungszeichen gemeinsam mit den Nutzdaten innerhalb einzelner Datenbits derselben übertragen werden.

14. Verfahren nach einem der Ansprüche 1 bis 13, **dadurch gekennzeichnet, dass** der asynchrone Protokollabschnitt durch ein weiteres Steuersignal des Lesegeräts beendet wird.

15. Verfahren nach einem der Ansprüche 1 bis 14, **dadurch gekennzeichnet, dass** in Anschluss an den asynchronen Protokollabschnitt ein Quittungsabschnitt übertragen wird, durch den eine vorläufige Auswahl eines Transponders oder Sensors durch das Lesegerät bestätigt oder verworfen wird.

16. Verfahren nach Anspruch 15, **dadurch gekennzeichnet, dass** der Quittungeabechnitt in einem synchronen Modus übertragen wird.

17. Verfahren nach Anspruch 16, **dadurch gekennzeichnet, dass** das Lesegerät oder der vorläufig ausgewählte Transponder oder Sensor Prüfdaten überträgt, wie CRC-Daten, deren Vergleich mit komplementären Prüfdaten in dem jeweiligen Empfänger zu einem Bestätigen oder Verwerfen der vorläufigen Auswahl verwendet wird.

18. Verfahren nach Anspruch 16 oder 17, **dadurch gekennzeichnet, dass** die Prüfdaten unabhängig von optionalen Sicherungszeichen des asynchronen Protokollabschnitts sind.

19. Verfahren nach Anspruch 15, **dadurch gekennzeichnet, dass** der Quittungsabschnitt in einem synchronen Modus übertragen wird.

20. Verfahren nach den Ansprüchen 6 und 19, **dadurch gekennzeichnet, dass** der vorläufig ausgewählte Transponder oder Sensor die Zufallszahl und optional zugehörige Prüfdaten, wie CRC-Daten, überträgt.

21. Verfahren nach Anspruch 19 oder 20, **dadurch gekennzeichnet, dass** zum Bestätigen der vorläufigen Auswahl ein Bestätigungssignal durch das Lesegerät an den Transponder oder Sensor innerhalb des Quittungsabschnitts übertragen wird.

22. Verfahren nach einem der Ansprüche 19 bis 21, **dadurch gekennzeichnet, dass** bei Ausbleiben des Bestätigungssignals zumindest innerhalb eines Bestätigungszeitraums der Transponder oder Sensor die vorläufige Auswahl verwirft.

23. Verfahren nach einem der Ansprüche 1 bis 22, **dadurch gekennzeichnet, dass** zum Aktivieren zumindest der während des wenigstens einen Protokollabschnitts asynchronen Datenübertragung ein entsprechender Aktivierungs-Steuerbefehl vom Lesegerät an die Transponder oder Sensoren übertragen wird.

24. Verfahren nach Anspruch 23, **dadurch gekennzeichnet, dass** der Aktivierungs-Steuerbefehl in den Transpondern oder Sensoren gespeichert und bei nachfolgendem Empfang eines Wieder-Steuerbefehls erneut ausgeführt wird.

25. Verfahren nach Anspruch 24, **dadurch gekennzeichnet, dass** der Wiederhol-Steuerbefehl gegenüber dem Aktivierungs-Steuerbefehl verkürzt ist.

26. Verfahren nach Anspruch 24 oder 25, **dadurch gekennzeichnet, dass** vor einem erneuten Ausführen des Aktivierungs-Steuerbefehls Prüfdaten des Wiederhol-Steuerbefehls überprüft werden.

27. Verfahren nach einem der Ansprüche 24 bis 26, **dadurch gekennzeichnet, dass** der Wiederhol-Steuerbefehl ein Steuersymbol zum Aktivieren einer Übertragung von Sicherungszeichen gemeinsam mit Nutzdaten innerhalb einzelner Datenbits derselben enthält.

28. Verfahren zum Steuern einer Datenübertragung, insbesondere einer Antikollisionsprozedur, nach einem der Ansprüche 1 bis 23, in RFID- oder Remote-Sensor-Systemen mit einer Mehrzahl an Transpondern oder Sensoren, insbesondere Systemen mit einer Mehrzahl an Lesegeräten, wobei eine von einem Lesegerät an wenigstens einen Transponder oder Sensor übertragene Befehlsstruktur zur Datenübertragung durch den Transponder oder Sensor mit zusätzlichen Parameter-und/oder Adress-Erweiterungen durch den Transponder oder Sensor ausgeführt und gespeichert wird und wobei nach anschließendem Empfang eines Wiederhol-Steuerbefehls der gespeicherte Befehl erneut ausgeführt wird.

29. Verfahren nach Anspruch 28, **dadurch gekennzeichnet, dass** vor einem erneuten Ausführen des Aktivierungs-Steuerbefehls Prüfdaten des Wiederhol-Steuerbefehls überprüft werden.

30. Verfahren nach Anspruch 28 oder 29, **dadurch gekennzeichnet, dass** die Befehlsstruktur als Erweiterung einen Zeiger auf einen Speicherblock und eine Bitadresse des Tags enthält.

31. Verfahren nach einem der Ansprüche 28 bis 30, **dadurch gekennzeichnet, dass** der Wiederhol-Steuerbefehl gegenüber dem Aktivierungs-Steuerbefehl verkürzt ist.

32. Verfahren nach einem der Ansprüche 28 bis 31, **dadurch gekennzeichnet, dass** durch den Empfang des Wiederhol-steuerbefehls ein Speichern dieses Befehls verhindert wird.

33. Verfahren nach einem der.Ansprüche 28 bis 32, **dadurch gekennzeichnet, dass** der Wiederhol-Steuerbefehl ein Steuersymbol zum Aktivieren einer Übertragung von Sicherungszeichen gemeinsam mit Nutzdaten innerhalb einzelner Datenbits derselben enthält.

34. Verfahren nach einem der Ansprüche 28 bis 33, **dadurch gekennzeichnet, dass** der Wiederhol-Steuerbefehl ein Quittungsbit zum Bestätigen oder Verwerfen der Vorauswahl eines Transponders oder Sensors enthält.

## Claims

1. Method of selecting at least one transponder or sensor in RFID or remote sensor systems with a plurality of transponders or sensors, particularly systems with a plurality of readers, **characterised in that** individual transponders or sensors are deterministically preselected by at least one reader and that after provisional selection of at least one transponder or sensor has been carried out data, particularly for confirmation of the preselection, are asynchronously transmitted from the transponder or sensor to the reader during at least one protocol segment.

2. Method according to claim 1, **characterised in that** a respective first bit sequence with a length of m bits is generated by the transponders or sensors for selection purposes.

3. Method according to claim 2, **characterised in that** the first bit sequence is generated at least when an asynchronous transmission mode was selected for a data return connection from the transponders or sensors to the reader.

4. Method according to any one of claims 1 to 3, **characterised in that** an identification bit sequence with a length of n bits, wherein n is equal to or smaller than m, is used for the preselection of a transponder or sensor.

5. Method according to claim 4, **characterised in that** the identification bit sequence is obtained from the first bit sequence.

6. Method according to any one of claims 2 to 5, **characterised in that** the first bit sequence is formed by a random number and/or a memory content.

7. Method according to any one of claims 1 to 6, **characterised in that** for the preselection of a transponder or sensor by the reader a selection bit sequence is transmitted bit-by-bit to the transponders or sensors and compared bit-by-bit with the identification bit sequence.

8. Method according to claims 6 and 7, **characterised in that** a bit length of the random number is adapted particularly reduced, in dependence on progress of the bit-by-bit comparison.

9. Method according to claim 7 or 8, **characterised in that** depending on the comparison a transponder or a sensor is selected and the selection process is ended by a control end signal of the reader.

10. Method according to claim 9, **characterised in that** the reader transmits head data, which contain reference symbols for recognition of the control end signal, prior to transmission of the selection bit sequence.

11. Method according to claim 9 or 10, **characterised in that** the reader transmits head data, which contain references symbols for selection of an asynchronous data return connection from the transponder or sensor to the reader, prior to transmission of the selection bit sequence.

12. Method according to any one of claim 1 to 11, **characterised in that** payload data and optionally additional security marks are transmitted during the asynchronous protocol segment.

13. Method according to claim 12, **characterised in that** the security marks are transmitted together with the payload data within individual data bits of the same.

14. Method according to any one of claims 1 to 13, **characterised in that** the asynchronous protocol segment is ended by a further control signal of the reader.

15. Method according to any one of claims 1 to 14, **characterised in that** an acknowledgement segment by which a provisional selection of a transponder or sensor by the reader is confirmed or rejected is transmitted consecutively to the asynchronous protocol segment.

16. Method according to claim 15, **characterised in that** the acknowledgement segment is transmitted in a synchronous mode.

17. Method according claim 16, **characterised in that** the reader or the provisionally selected transponder or sensor transmits check data, such as CRC data, the comparison of which with complementary check data in the respective receiver is used for confirmation or rejection of the provisional selection.

18. Method according to claim 16 or 17, **characterised in that** the check data are independent of optional security marks of the asynchronous protocol segment.

19. Method according to claim 15, **characterised in that** the acknowledgement segment is transmitted in a synchronous mode.

20. Method according to claims 6 and 19, **characterised in that** the provisionally selected transponder or sensor transmits the random number and optionally associated check data, such as CRC data.

21. Method according to claim 19 or 20, **characterised in that** for confirmation of the provisional selection a confirmation signal is transmitted by the reader to the transponder or sensor within the acknowledgement segment.

22. Method according to any one of claims 19 to 21, **characterised in that** in the case of omission of the acknowledgement signal the transponder or sensor rejects the provisional selection at least within a confirmation time period.

23. Method according to any one of claims 1 to 22, **characterised in that** for activation of at least the data transmission asynchronous during the at least one protocol segment a corresponding activation control command is transmitted from the reader to the transponders or sensors.

24. Method according to claim 23, **characterised in that** the activation control command is stored in the transponders or sensors and in the case of subsequent receipt of a further control command is executed again.

25. Method according to claim 24, **characterised in that** the repeat control command is shortened by comparison with the activation control command.

26. Method according to claim 24 or 25, **characterised in that** check data of the repeat control command are checked prior to renewed execution of the activation control command.

27. Method according to any one of claims 24 to 26, **characterised in that** the repeat control command contains a control symbol for activation of a transmission of security marks together with payload data within individual data bits of the same.

28. Method of controlling a data transmission, particularly an anti-collision procedure, according to any one of claims 1 to 23, in RFID or remote sensor systems with a plurality of transponders or sensors, particularly systems with a plurality of readers, wherein a command structure, which is transmitted by a reader to at least one transponder or sensor, for the data transmission by the transponder or sensor is, with additional parameter and/or address extensions, executed and stored by the transponder or sensor and wherein after subsequent receipt of a repeat control command the stored command is executed again.

29. Method according to claim 28, **characterised in that** check data of the repeat control command are checked prior to a renewed execution of the activation control command.

30. Method according to claim 28 or 29, **characterised in that** the command structure contains, as extension, a pointer on a memory block and a bit address of the day.

31. Method according to any one of claims 28 to 30, **characterised in that** the repeat control command is shortened by comparison with the activation control command.

32. Method according to any one of claims 28 to 31, **characterised in that** through the receipt of the repeat control command a storage of this command is prevented.

33. Method according to any one of claims 28 to 32, **characterised in that** the repeat control command contains a control symbol for activation of a transmission of security marks together with payload data within individual bits of the same.

34. Method according to any one of claims 28 to 33, **characterised in that** the repeat control command contains an acknowledgement bit for confirmation or rejection of the preselection of a transponder or sensor.

## Revendications

1. Procédé de sélection d'au moins un transpondeur ou capteur dans des systèmes RFID ou de télédétection comprenant une pluralité de transpondeurs ou de capteurs, plus particulièrement des systèmes comprenant une pluralité d'appareils de lecture, **caractérisé en ce que** des transpondeurs ou des capteurs individuels sont sélectionnés à l'avance de manière déterministique par au moins un lecteur, et **en ce qu'**après la sélection provisoire d'au moins un transpondeur ou capteur, des données, plus particulièrement des données de confirmation de la présélection, sont transmises de manière asynchrone du transpondeur ou du capteur vers le lecteur durant au moins un segment de protocole.

2. Procédé selon la revendication 1, **caractérisé en ce que** pour des raisons de sélection les transpondeurs ou les capteurs génèrent chacun une première séquence de bits d'une longueur de m bits.

3. Procédé selon la revendication 2, **caractérisé en ce que** la première séquence de bits est générée au moins lorsqu'un mode asynchrone de transmission vers le lecteur pour une liaison retour A été sélectionné par les transpondeurs ou les capteurs.

4. Procédé selon l'une quelconque des revendications 1 à 3, **caractérisé en ce que** pour la présélection d'un transpondeur ou d'un capteur, on utilise une séquence de bits d'identification d'une longueur de n bits, n étant inférieur ou égal à m.

5. Procédé selon la revendication 4, **caractérisé en ce que** la séquence de bits d'identification est obtenue à partir de la première séquence de bits.

6. Procédé selon l'une quelconque des revendications 2 à 5, **caractérisé en ce que** la première séquence de bits est constituée par un nombre aléatoire et/ou un contenu de mémoire.

7. Procédé selon l'une quelconque des revendications 1 à 6, **caractérisé en ce que** pour la présélection d'un transpondeur ou d'un capteur par le lecteur, on transmet une séquence de bits de sélection bit par bit aux transpondeurs ou aux capteurs et on la compare bit par bit à une séquence de bits d'identification.

8. Procédé selon les revendications 6 et 7, **caractérisé en ce que** l'on ajuste, plus particulièrement que l'on réduit une longueur de bits du nombre aléatoire en fonction d'une progression de la comparaison bit par bit.

9. Procédé selon la revendication 7 ou 8, **caractérisé en ce qu'**au fur et à mesure de la comparaison, on sélectionne un transpondeur ou un capteur et **en ce que** le processus de sélection est interrompu par un signal de fin de commande du lecteur.

10. Procédé selon la revendication 9, **caractérisé en ce qu'**avant la transmission de la séquence de bits de sélection, le lecteur transmet des données d'en-tête contenant des symboles de référence permettant de reconnaître le signal de fin de commande.

11. Procédé selon la revendication 9 ou 10, **caractérisé en ce qu'**avant la transmission de la séquence de bits de sélection, le lecteur transmet des données d'en-tête contenant des symboles de référence permettant la sélection d'une liaison asynchrone de retour de données du transpondeur ou du capteur vers le lecteur.

12. Procédé selon l'une quelconque des revendications 1 à 11, **caractérisé en ce que** durant le segment de protocole asynchrone, on transmet des données utiles et optionnellement des signaux de contrôle de sécurité supplémentaires.

13. Procédé selon la revendication 12, **caractérisé en ce que** les signaux de sécurité sont transmis ensemble avec les données utiles à l'intérieur de bits de données individuels de celles-ci.

14. Procédé selon l'une quelconque des revendications 1 à 13, **caractérisé en ce que** le segment de protocole asynchrone est interrompu par un signal de commande supplémentaire du lecteur.

15. Procédé selon l'une quelconque des revendications 1 à 14, **caractérisé en ce que** consécutivement au segment de protocole asynchrone on transmet un segment de validation par lequel une sélection provisoire d'un transpondeur ou d'un capteur est confirmée ou rejetée par le lecteur.

16. Procédé selon la revendication 15, **caractérisé en ce que** le segment de validation est transmis dans un mode synchrone.

17. Procédé selon la revendication 16, **caractérisé en ce que** le lecteur ou le transpondeur ou le capteur provisoirement sélectionnés transmet des données de contrôle telles que des données CRC, dont la comparaison à des données complémentaires de contrôle est utilisée dans le récepteur respectif pour confirmer ou rejeter la sélection provisoire.

18. Procédé selon la revendication 16 ou 17, **caractérisé en ce que** les données de contrôle sont indépendantes de signaux de sécurité optionnels du segment de protocole asynchrone.

19. Procédé selon la revendication 15, **caractérisé en ce que** le segment de validation est transmis dans un mode synchrone.

20. Procédé selon les revendications 6 et 19, **caractérisé en ce que** le transpondeur ou le capteur provisoirement sélectionné transmet le nombre aléatoire et des données de contrôle optionnellement associées, telles que des données CRC.

21. Procédé selon la revendication 19 ou 20, **caractérisé en ce que** pour confirmer la sélection provisoire, le lecteur transmet un signal de confirmation au transpondeur ou au capteur à l'intérieur du segment de validation.

22. Procédé selon l'une quelconque des revendications 1 à 22, **caractérisé en ce qu'**en l'absence du signal de confirmation, au moins durant la période de confirmation, le transpondeur ou le capteur rejette la sélection provisoire.

23. Procédé selon l'une quelconque des revendications 19 à 21, **caractérisé en ce que** pour activer au moins la transmission de données asynchrone durant l'au moins un segment de protocole, une instruction de commande d'activation correspondante est transmise du lecteur vers le transpondeur ou le capteur.

24. Procédé selon la revendication 23, **caractérisé en ce que** l'instruction de commande d'activation est mémorisée dans les transpondeurs ou les capteurs et **en ce qu'**elle est exécutée à nouveau en cas de réception ultérieure d'une instruction de commande de répétition.

25. Procédé selon la revendication 24, **caractérisé en ce que** l'instruction de commande de répétition est raccourcie par rapport à l'instruction de commande d'activation.

26. Procédé selon la revendication 24 ou 25, **caractérisé en ce qu'**avant une exécution répétée de l'instruction de commande d'activation, on contrôle des données de contrôle de l'instruction de commande de répétition.

27. Procédé selon l'une quelconque des revendications 24 à 26, **caractérisé en ce que** l'instruction de commande de répétition contient un signal de commande permettant d'activer une transmission de signaux de sécurité ensemble avec des données utiles à l'intérieur de bits individuels de données de celles-ci.

28. Procédé de commande d'une transmission de données, plus particulièrement d'une procédure anti-collision, selon l'une quelconque des revendications 1 à 23, dans des systèmes RFID ou de télédétection comprenant une pluralité de transpondeurs ou de capteurs, plus particulièrement des systèmes comprenant une pluralité de lecteurs, dans lequel une structure d'instruction transmise par un lecteur à au moins un transpondeur ou capteur permettant la transmission de données par le transpondeur ou le capteur avec des extensions supplémentaires de paramètres et/ou d'adresses est exécutée ou mémorisée par le transpondeur ou le capteur, et dans lequel l'instruction mémorisée est exécutée à nouveau après réception consécutive d'une instruction de commande de répétition.

29. Procédé selon la revendication 28, **caractérisé en ce qu'**avant une nouvelle exécution de l'instruction de commande d'activation, on contrôle des données de contrôle de l'instruction de commande de répétition.

30. Procédé selon la revendication 28 ou 29, **caractérisé en ce que** la structure d'instruction contient comme extension un indicateur sur un bloc mémoire et une adresse bit du jour.

31. Procédé selon l'une quelconque des revendications 28 à 30, **caractérisé en ce que** l'instruction de commande de répétition est raccourcie par rapport à l'instruction de commande d'activation.

32. Procédé selon l'une quelconque des revendications 28 à 31, **caractérisé en ce que** la réception de l'instruction de commande de répétition empêche la mémorisation de cette instruction.

33. Procédé selon l'une quelconque des revendications 28 à 32, **caractérisé en ce que** l'instruction de commande de répétition contient un signal de commande permettant d'activer la transmission de signaux de sécurité ensemble avec des données utiles à l'intérieur de bits individuels de données de celles-ci.

34. Procédé selon l'une quelconque des revendications 28 à 33, **caractérisé en ce que** l'instruction de commande de répétition contient un bit de validation pour confirmer ou rejeter la présélection d'un transpondeur ou d'un capteur.
